(19) **Europäisches Patentamt**

**European Patent Office**

**Office européen des brevets**

(11) **EP 1 136 695 B1**

(12) **EUROPEAN PATENT SPECIFICATION**

(45) Date of publication and mention
of the grant of the patent:
**18.05.2005 Bulletin 2005/20**

(51) Int Cl.⁷: **F02N 17/04**, F02M 31/13

(21) Application number: **01106836.8**

(22) Date of filing: **19.03.2001**

(54) **Diagnostic system for an electric heater of an air-intake manifold of a diesel engine**

Diagnosesystem für die elektrische Heizvorrichtung eines zu einem Dieselmotor gehörigen Lüfteinlasskrümmers

Système diagnostique pour dispositif de chauffage d'un collecteur d'admission d'air d'un moteur diesel

(84) Designated Contracting States:
**AT BE CH CY DE DK ES FI FR GB GR IE IT LI LU MC NL PT SE TR**

(30) Priority: **17.03.2000 IT TO000257**

(43) Date of publication of application:
**26.09.2001 Bulletin 2001/39**

(73) Proprietor: **IVECO S.p.A.**
**10156 Torino (IT)**

(72) Inventor: **Bersia, Clara**
**10095 Grugliasco (IT)**

(74) Representative: **Gervasi, Gemma, Dr. et al**
**NOTARBARTOLO & GERVASI Srl,**
**Corso di Porta Vittoria, 9**
**20122 Milano (IT)**

(56) References cited:
**EP-A- 0 965 746**        **US-A- 4 782 800**
**US-A- 5 138 987**

**Description**

The present invention relates to a diagnostic system for an electric heater of an air-intake manifold of a diesel engine.

It is known that diesel engines may be provided with an electric heater (grid heater) disposed in the intake manifold and comprising one (or more) electric resistors powered by the vehicle's battery.

This electric heater is normally operated for a few seconds immediately before starting up the diesel engine so as to heat the air fed to the combustion chambers of the engine, thereby facilitating the starting of the engine itself.

More particularly, the electric heater can be connected to the battery via a power relay controlled to open/close by the electronic processor which controls the diesel engine. When closed, this relay has to carry a high current (100-300 amperes) which, in some operating conditions, can damage the relay itself; furthermore, it is known how electric resistors can be easily damaged. However, a fault which precludes the supply and/or operation of the resistors cannot be directly detected by the electronic processor as a result of the galvanic separation effected by the relay which separates the (low power) control side, mainly comprising the electronic processor, from the high power supply side comprising the relay contacts, the supply lines and the resistors.

These drawbacks affect also the air intake heating and diagnostic system disclosed in EP 965 746-A: that system comprises a microprocessor based controller that can activate electrical heating elements for a preheat time period prior to starting the engine and for a postheat time period after starting the engine. The microcontroller receives inputs corresponding to intake manifold air temperature, battery temperature, vehicle speed, engine speed, and key switch position. The system continuously monitors the integrity of the various sensors, monitors the functionality of the heating elements during the postheat time period, and warns the vehicle operator by illuminating a "check engine" lamp if certain fault conditions are detected. In both cases, the controller sets fault flags within the controller memory corresponding to the detected fault conditions. Nevertheless in this system too the galvanic separation effected by the relays controlling the electrical heating elements do not allow detecting faults that preclude the supply and/or operation of the resistors.

The object of the present invention is to devise a diagnostic system which makes possible the detection of any fault which does not allow the electric heater to operate.

This object is achieved by the present invention in that it relates to a diagnostic system for an electric heater of an air-intake manifold of a diesel engine of the type described in claim 1.

The invention will now be described with reference to the accompanying drawings which illustrate a non-restrictive example of embodiment thereof, wherein:

- Figure 1 illustrates schematically a diesel engine provided with an electric heater disposed in an intake manifold and operating jointly with a diagnostic system designed in accordance with the present invention;
- Figure 2 illustrates the behaviour with time of signals controlled by the diagnostic system of the present invention; and
- Figure 3 illustrates the logic operating diagram of the diagnostic system.

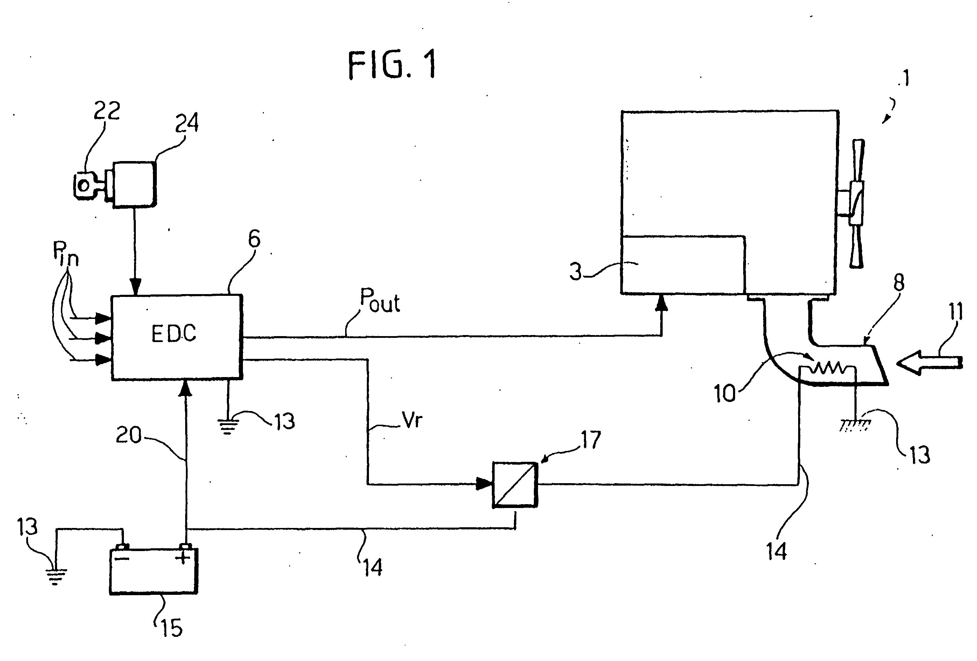

In Figure 1 the reference numeral 1 generally denotes a diesel engine which is provided with a fuel-injection system 3 controlled by an electronic processor 6 (also called EDC Electronic Diesel Control). The EDC processor 6 (of known type) receives a plurality of input information signals Pin and generates at the output control signals Pout fed to the injection system 3 so as to control the supply of a desired quantity of fuel.

The diesel engine 1 is further provided with an intake manifold 8 (illustrated schematically) which is provided with a heater device 10 intended to heat the flow of air 11 drawn into the manifold and fed to the combustion chambers of the diesel engine 1. The heater device 10 is of known type and, for example, may comprise one (or more) electric resistors disposed inside the intake duct 8 and intended to heat the air flowing inside the manifold 8.

In particular, the electric resistor 10 has a first terminal connected to a reference voltage 13 (earth) and a second terminal connected, through an electrical lead 14, to the positive terminal (+) of the battery 15 of the vehicle (not shown) in which the engine 1 is installed. A remote-controlled switch 17 is further provided along the electrical lead 14 so that, when closed, it allows power to be supplied to the resistor 10. Advantageously, the remote-controlled switch 17 comprises a power relay which receives a low-voltage electrical control signal Vr from the electronic processor 6. The electronic processor 6 is also supplied with power by the battery 15 through an electrical lead 20.

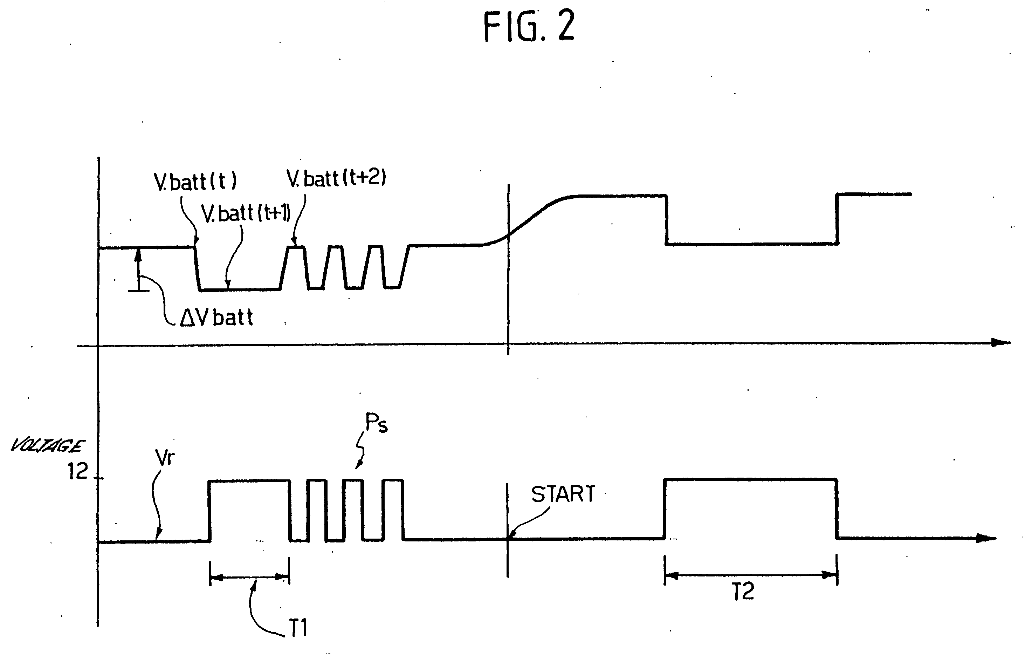

The electrical control signal Vr is generated, on the basis of preset logic, by the electronic processor 6; advantageously this control signal is adapted to allow power to be supplied to the resistor 10 for a first preset period of time T1 (Figure 2) before starting the engine 1 and to effect a successive power supply to the resistor 10 for a second preset period of time T2 succeeding the first period of time T1; moreover, the second preset period of time T2 (for example, 100-180 seconds) is longer than the first period T1 (for example, 3-5 seconds). Advantageously, the control signal Vr assumes a first operative value (for example 0 volts) so as to effect the opening of the switch 17 and a second operative value (for example 12 volts) so as to effect the power supply to the solenoid of the relay (not shown) and allow the closing of the relay 17 and thus the power supply to the resistor 10.

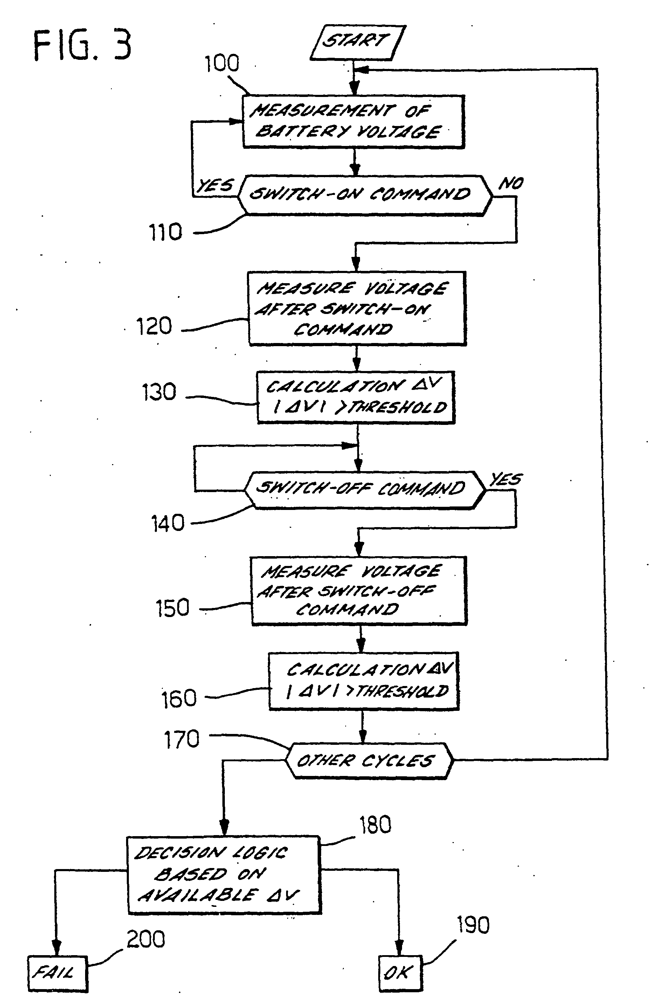

Figure 3 illustrates a block diagram which shows the operation of the diagnostic device according to the present invention.

Initially a block 100 is reached, which effects the measurement of the voltage Vbatt(t) of the battery 15; this measurement can be carried out, for example, by measuring the value of the voltage in the electric lead 20.

The block 100 is followed by a block 110 which is awaiting a switch-on command for the heater device 10; this monitoring is advantageously carried out by examining the electrical control signal Vr of the relay 17; in particular, when the control signal Vr passes from the first operative value to the second operative value a switch-on command for the heater device 10 is detected and the block 110 is followed by a block 120.

The block 120 carries out, at an instant t+1 succeeding the switch-on command for the heater device heater device 10, the measurement of the voltage Vbatt (t+1) of the battery 15. It has to be detected how, following the power supply to the resistor 10, the battery voltage Vbatt(t+1) typically assumes a minimum value with respect to the preceding value Vbatt(t) owing to the high current consumption of the resistor 10.

The block 120 is followed by a block 130 which calculates the difference $\Delta$Vbatt between the battery voltage measured before and after the issuing of the switch-on command for the heater device 10, namely:

$$\Delta\text{Vbatt} = \text{Vbatt(t)} - \text{Vbatt(t+1)}$$

Under conditions of actual power supply to the device 10, the difference between the voltages Vbatt(t) and Vbatt(t+1) can clearly be detected and the difference $\Delta$Vbatt assumes values which are not negligible. Therefore, the block 130 verifies whether the measured voltage difference $\Delta$Vbatt assumes a value above a threshold threshold1; in the affirmative ($\Delta$Vbatt > threshold) a current consumption by the resistor 10 is detected and, therefore, correct operation of the heater device 10 when it is switched on, otherwise ($\Delta$Vbatt < threshold) an anomalous current consumption is detected and, therefore, faulty operation of the heater device 10 when it is switched on.

The block 130 is followed by a block 140 which is awaiting a switch-off command for the heater device 10; this monitoring is advantageously carried out by examining the electrical control signal of the relay 17; in particular, when this control signal Vr passes from the second operative value to the first operative value a switch-off command is detected for the heater device heater device 10 and the block 140 is followed by a block 150.

The block 150 carries out, at an instant t+2 succeeding the switch-off command for the heater device 10, the measurement of the voltage Vbatt(t+2) of the battery 15. It has to be detected how, following the interruption in the power supply to the resistor 10, the battery voltage $\Delta$Vbatt(t+2) normally returns to the preceding value Vbatt(t).

The block 150 is followed by a block 160 which calculates the difference $\Delta$Vbatt between the battery voltage measured before and after the sending of the switch-off command for the heater device 10, namely:

$$\Delta\text{Vbatt} = \text{Vbatt(t+1)} - \text{Vbatt(t+2)}$$

Under conditions of actual power supply to the device 10 and consequent lack of power supply to the device 10 itself, the difference between the voltages Vbatt(t+1) and Vbatt(t+2) can clearly be detected and the difference $\Delta$Vbatt assumes a value which is not negligible. Therefore, the block 160 verifies whether the absolute value of the measured voltage difference Vbatt assumes a value above a threshold threshold2; in the affirmative ($\Delta$Vbatt > threshold2) the end of current consumption by the resistor 10 is detected and, therefore, correct operation of the heater device 10 when it is switched off, otherwise ($\Delta$Vbatt < threshold2) faulty operation of the heater device 10 is detected when it is switched off.

The block 160 is followed by a block 170 which verifies the necessity of other control cycles; in the affirmative (other control cycles to be activated) a return is made from the block 170 to the block 100, otherwise (end of the control cycles) the block 170 is followed by a block 180 which carries out the diagnosis of the operation of the heater device 10 on the basis of the data currently available. The block 180 can detect correct operation of heater device 10 (block 190 - OK) or faulty operation of the heater device 10 (block 200 - FAIL).

In operation, following the insertion of the ignition key 22 (illustrated schematically) into the ignition lock 24 (illustrated schematically) and its rotation for a first section of angular travel, the electronic processor 6 controls a first switching-on cycle of the heater device 10 for the purpose of heating the air fed to the engine 1 and facilitating the starting thereof. The processor 6 controls the transition of the signal Vr which passes from the first operative value to the second operative value so as to effect the closing of the relay 17 and the connection of the resistor 10 to the battery 15. If the resistor 10 is supplied correctly, a variation ($\Delta$Vbatt) occurs in the battery voltage; this variation is automatically detected (blocks 100, 110 and 120) and compared with a threshold value (block 130) so as to detect a high current consumption caused by correct operation of the heater device 10 when it is switched on.

Subsequently, the electronic processor 6 controls a further transition of the signal Vr which passes from the second operative value to the first operative value so as to effect the opening of the relay 17 and the disconnection of the resistor 10 from the battery 15. If the resistor 10 is correctly disconnected, a variation (ΔVbatt) occurs in the battery voltage which returns to the value prior to the switching-on of the heater device 10; this variation is automatically detected (blocks 140, 150) and compared with a threshold value (block 160) so as to detect the cutting-out of the heater device 10.

Subsequently, the ignition key 22 is caused to rotate for a second section of angular travel so as to control the power supply to the starter motor (not shown) and the starting of the engine 1. Following the starting of the engine 1, the battery current increases (Figure 2) as a result of the operation of the alternator (not shown).

The above-mentioned operations can be repeated (block 170) for other power supply cycles to the heater device 10, for example carried out with the engine 1 running. In particular, it is possible to monitor the variation in battery voltage resulting from a switch-on command for the heater device 10 effected with the engine running and a subsequent variation in battery voltage caused by a switch-off command for the heater device 10 effected with the engine running.

Alternatively or additionally to what has been stated above, it is possible to command a plurality of successive start-ups and switch-offs Ps (Figure 2) of the heater device 10, and for each start-up command and for each switch-off command it is possible to detect the respective variation in the battery voltage.

The block 180 carries out a decision analysis based on the information supplied to it.

For example, if a significant variation in the battery voltage is detected following the switch-on command and following the switch-off command for the heater device 10 (i.e. if correct operation of the heater device 10 is detected upon starting up and switching off), correct operation of the heater device 10 is recognised.

If at least one of the two variations in voltage is not significant (i.e. if faulty operation of the heater device 10 is detected upon starting up and switching off), faulty operation of the heater device 10 is detected.

If more command cycles for switching on and switching off the heater device 10 are carried out, it is possible to activate more complex logics than those described above, for example if a significant variation in battery voltage is detected for a preset number of commands for switching on and switching off the heater device 10, correct operation of the heater device 10 is recognised.

Analogously, if faulty operation of the heater device 10 is detected for a preset number of switching-on and/or switching-off operations, faulty operation of the heater device 10 is detected.

The advantages achieved with the present invention are apparent from the foregoing, insofar as any fault (for example interruption in the electrical lead 14, faulty operation of the relay 17, breakdown of the resistor 10) which prevents power supply to the heater device 10 and involves failure of the latter to consume current; consequently no variation in the battery voltage is detected.

## Claims

1. A diagnostic system for an electric heater (10) connected with an air-intake manifold (8) of a diesel engine, in which at least one remote-controlled (6) switch (17) is disposed between the vehicle battery (15) and said electric heater (10) , said system comprising

   - means for monitoring the voltage (Vbatt) of the vehicle battery adapted to detect variations (ΔVbatt) in said voltage associated with commands for said switch (17); and **characterized by** further comprising
   - means for evaluating the condition of said electric heater (10) based on the variations detected.

2. A system according to claim 1, **characterised in that** said monitoring means are adapted to detect the variation (ΔVbatt) in battery voltage following a closing command for said switch (17); said evaluating means being adapted to compare the variation in voltage detected with a threshold value so as to recognise high current consumption and, therefore, correct operation of the electric heater (10) when it is switched on.

3. A system according to claim 2, **characterised in that** said monitoring means are adapted to detect the variation (ΔVbatt) in battery voltage following an opening command for said switch (17); said evaluating means being adapted to compare the variation in voltage detected with a threshold value so as to recognise the de-energising of the electric heater (10) and, therefore, correct operation of the electric heater (10) when it is switched off.

4. A system according to claim 3, **characterised by** comprising decision means (180) adapted to recognise correct operation of the electric heater (10) if correct operation of the electric heater (10) is detected when it is switched on and when it is switched off; said decision means (180) being adapted to recognise faulty operation of the electric heater (10) if correct operation of the electric heater (10) is not detected when it is switched on or when it is switched off.

## Patentansprüche

1. Diagnosesystem für eine elektrische Heizvorrichtung (10), welche mit einem Luftansaugrohr (8) eines Dieselmotors verbunden ist, bei welchem mindestens ein ferngesteuerter (6) Schalter (17) zwischen der Fahrzeugbatterie (15) und genannter elektrischer Heizvorrichtung (10) angeordnet ist, wobei genanntes System umfasst

   - ein Hilfsmittel zum Überwachen der Spannung (Vbatt) der Fahrzeugbatterie, welches angebracht ist, um Abweichungen (ΔVbatt) bei genannter Spannung, welche mit Befehlen für genannten Schalter (17) verbunden sind, festzustellen; und **gekennzeichnet dadurch, daß** es weiter umfasst
   - ein Hilfsmittel zum Bewerten des Zustandes der genannten elektrischen Heizvorrichtung (10), welches sich auf die festgestellten Abweichungen abstützt.

2. System gemäß Anspruch 1, **dadurch gekennzeichnet, daß** genanntes Überwachungshilfsmittel angebracht ist, um nach einem Schließbefehl für genannten Schalter (17) die Abweichung (ΔVbatt) bei der Batteriespannung festzustellen; genanntes Bewertungshilfsmittel angebracht ist, um die festgestellte Abweichung bei der Spannung mit einem Schwellwert zu vergleichen, um hohen Stromverbrauch und deswegen korrekten Betrieb der elektrischen Heizvorrichtung (10) zu erkennen, wenn sie eingeschaltet wird.

3. System gemäß Anspruch 2, **dadurch gekennzeichnet, daß** genanntes Überwachungshilfsmittel angebracht ist, um nach einem Öffnungsbefehl für genannten Schalter (17) die Abweichung (ΔVbatt) bei der Batteriespannung festzustellen; genanntes Bewertungshilfsmittel angebracht ist, um die festgestellte Abweichung bei der Spannung mit einem Schwellwert zu vergleichen, um den Spannungsabfall bei der elektrischen Heizvorrichtung (10) und deswegen den korrekten Betrieb der elektrischen Heizvorrichtung (10) zu erkennen, wenn sie abgeschaltet wird.

4. System gemäß Anspruch 3, **dadurch gekennzeichnet, daß** es ein Entscheidungshilfsmittel (180) umfasst, welches angebracht ist, um den korrekten Betrieb der elektrischen Heizvorrichtung (10) zu erkennen, falls der korrekte Betrieb der elektrischen Heizvorrichtung (10) festgestellt wird, wenn sie eingeschaltet wird und wenn sie ausgeschaltet wird; genanntes Entscheidungshilfsmittel (180) angebracht ist, um einen fehlerhaften Betrieb der elektrischen Heizvorrichtung (10) zu erkennen, falls der korrekte Betrieb der elektrischen Heizvorrichtung (10) nicht festgestellt wird, wenn sie eingeschaltet wird oder wenn sie ausgeschaltet wird.

## Revendications

1. Système diagnostique pour un dispositif de chauffage électrique (10) relié à un collecteur d'admission d'air (8) d'un moteur diesel, où au moins un commutateur (17) commandé à distance (6) est disposé entre la batterie du véhicule (15) et ledit dispositif de chauffage électrique (10), ledit système comprenant

   - des moyens pour surveiller la tension (Vbatt) de la batterie du véhicule conçus pour détecter des variations (ΔVbatt) dans ladite tension associées à des commandes dudit commutateur (17) ; et caractérisé en comprenant en outre
   - des moyens pour évaluer la condition dudit dispositif de chauffage électrique (10) sur la base des variations détectées.

2. Système selon la revendication 1, **caractérisé en ce que** lesdits moyens de surveillance sont conçus pour détecter la variation (ΔVbatt) dans la tension de batterie à la suite d'une commande de fermeture dudit commutateur (17) ; lesdits moyens d'évaluation étant aptes à comparer la variation de tension détectée à une valeur de seuil de manière à reconnaître une consommation de courant élevée et, de ce fait, à corriger le fonctionnement du dispositif de chauffage électrique (10) lorsqu'il est mis en service.

3. Système selon la revendication 2, **caractérisé en ce que** lesdits moyens de surveillance sont conçus pour détecter la variation (ΔVbatt) dans la tension de batterie à la suite d'une commande d'ouverture dudit commutateur (17) ; lesdits moyens d'évaluation étant aptes à compare la variation de tension détectée à une valeur de seuil de manière à reconnaître la désexcitation du dispositif de chauffage électrique (10) et, de ce fait, à corriger le fonctionnement du dispositif de chauffage électrique (10) lorsqu'il est mis hors service.

4. Système selon la revendication 3, **caractérisé en ce qu'**il comprend des moyens de décision (180) aptes à reconnaître un fonctionnement correct du dispositif de chauffage électrique (10) si un fonctionnement correct du dispositif de chauffage électrique (10) est détecté lorsqu'il est mis en service et lorsqu'il est mis hors service ; lesdits moyens de décision (180) étant aptes à reconnaître un fonctionnement défectueux du dispositif de chauffage électrique (10) si le fonctionnement correct du dispositif de chauffage électrique (10) n'est pas détecté lorsqu'il est mis en service ou lorsqu'il est mis hors service.

FIG. 1

# FIG. 2

V.batt(t)

V.batt(t+1)

V.batt(t+2)

ΔV batt

VOLTAGE

Vr

Ps

12

START

T1

T2

EP 1 136 695 B1

FIG. 3

START

100

MEASUREMENT OF
BATTERY VOLTAGE

YES — SWITCH-ON COMMAND — NO

110

MEASURE VOLTAGE
AFTER SWITCH-ON
COMMAND

120

CALCULATION ΔV
| ΔV | > THRESHOLD

130

SWITCH-OFF COMMAND — YES

140

MEASURE VOLTAGE
AFTER SWITCH-OFF
COMMAND

150

CALCULATION ΔV
| ΔV | > THRESHOLD

160

170 — OTHER CYCLES

DECISION LOGIC
BASED ON
AVAILABLE ΔV

180

FAIL — 200

190 — OK